# DEMANDE DE BREVET EUROPEEN

(11) **EP 2 327 891 A1**
(43) Date de publication de la demande: **01.06.2011**
(21) Numéro de dépôt: 10192859.6
(22) Date de dépôt: 29.11.2010
(51) Int. Cl.: F16C 17/03, F16C 17/14, F16C 33/10, F16C 33/20, F16C 37/00

(54) **Hydrolienne**

(30) Priorité: 30.11.2009 FR 0958520
(71) Demandeur: ALSTOM Hydro France, 92300 Levallois Perret (FR)
(72) Inventeur: Bertea, Jean-François, 07300 Saint Jean de Muzols (FR)
(74) Mandataire: Myon, Gérard Jean-Pierre

(57) **Abrégé**

Cette hydrolienne comprend une turbine équipée d'un arbre (12) mobile en rotation autour d'un axe de rotation. L'hydrolienne comprend un élément de palier (20) pour supporter l'arbre (12). Les extrémités axiales de l'élément de palier (20) sont en communication de fluide avec la masse d'eau dans laquelle est installée l'hydrolienne. L'élément de palier (20) comprend une surface de palier (24) de forme cylindrique et coaxiale à l'axe de rotation. Le rayon (R24) de la surface de palier (24) est compris entre 1 m et 3 m et la surface de palier (24) est adaptée pour délimiter avec l'arbre (12) un volume de réception de liquide sous forme de film. La surface de palier (24) délimite plusieurs rainures (26) débouchant à chaque extrémité axiale de l'élément de palier (20). Lesdites rainures (26) ont des dimensions et proportions adaptées pour faire circuler du liquide dans le volume de réception par convection naturelle suite à l'échauffement et aux compressions du liquide lors de la rotation de l'arbre (12). Un premier rapport ayant comme numérateur, le rayon (R24) de la surface de palier (24) et comme dénominateur, la largeur d'une rainure (26) est compris entre 10 et 40.

## Description

La présente invention concerne une hydrolienne qui comprend une turbine équipée d'un arbre mobile en rotation supporté par un élément de palier, par exemple une bague. En particulier, la présente invention peut être appliquée à une hydrolienne installée dans un flux de liquide moteur qui peut circuler dans l'un ou l'autre sens.

Une hydrolienne de l'art antérieur comprend généralement une turbine équipée d'un arbre, ainsi qu'un élément de palier pour supporter cet arbre en rotation. Cet élément de palier comprend généralement une surface de palier de forme cylindrique et coaxiale à l'axe de rotation. Cette surface de palier forme avec l'arbre en rotation un film de liquide hydrodynamique.

Cependant, un élément de palier d'une hydrolienne de l'art antérieur ne permet pas de dissiper ou d'évacuer la chaleur générée par la rotation de l'arbre. Une hydrolienne de l'art antérieur nécessite donc un dispositif de pompage pour faire circuler le film liquide par convection forcée et ainsi évacuer la chaleur.

WO-A-02/16789 concerne un élément de palier auto-lubrifié et démontable conçu pour des arbres d'hélices de navire. Cet élément de palier comprend des lames longitudinales assemblées dans un manchon cylindrique. L'épaisseur radiale de deux lames adjacentes étant différente, des rainures sont formées le long des lames et permettent de faire circuler de l'eau par convection naturelle. Cependant, de manière classique, un palier auto-lubrifié qui supporte l'arbre de l'hélice d'un navire est disposé dans une cavité qui est ménagée dans la coque du bateau et qui est remplie avec de l'eau claire qui n'est pas en communication avec l'eau de mer. Un tel palier n'est pas adapté pour être lubrifié avec de l'eau de mer qui présente des impuretés en suspension, ce qui n'est pas satisfaisant.

L'un des buts de la présente invention est de remédier à ces inconvénients, en proposant notamment une hydrolienne dont un élément de palier permet la circulation de liquide par convection naturelle au niveau du palier, supprimant ainsi la nécessité d'incorporer un dispositif de pompage à l'hydrolienne.

Dans ce but, la présente invention a pour objet une hydrolienne comprenant une turbine équipée d'un arbre mobile en rotation autour d'un axe de rotation. L'hydrolienne comprend un élément de palier pour supporter l'arbre, les extrémités axiales de l'élément de palier étant en communication de fluide avec la masse d'eau dans laquelle est installée l'hydrolienne. L'élément de palier comprend une surface de palier de forme cylindrique et coaxiale à l'axe de rotation, le rayon de la surface de palier étant compris entre 1 m et 3 m et la surface de palier étant adaptée pour délimiter avec l'arbre un volume de réception de liquide sous forme de film. La surface de palier délimite plusieurs rainures débouchant à chaque extrémité axiale de l'élément de palier, lesdites rainures ayant des dimensions et proportions adaptées pour faire circuler du liquide dans le volume de réception par convection naturelle suite à l'échauffement et aux compressions du liquide lors de la rotation de l'arbre. Un premier rapport ayant comme numérateur, le rayon de la surface de palier et comme dénominateur, la largeur d'une rainure est compris entre 10 et 40.

En d'autres termes, les rainures forment des canaux sur la surface de palier, ces canaux ayant des dimensions et des proportions permettant à l'eau de mer d'y circuler par convection naturelle.

Selon d'autres caractéristiques avantageuses mais facultatives de la présente invention, prises isolément ou selon toute combinaison techniquement admissible :
- l'élément de palier s'étend tout autour de l'axe de rotation ;
- l'élément de palier s'étend, autour de l'axe de rotation, suivant un secteur angulaire inférieur à 360 degrés, de préférence inférieur à 200 degrés ;
- chacune desdites rainures s'étend suivant une direction parallèle à l'axe de rotation ;
- chacune desdites rainures s'étend suivant une hélice circulaire coaxiale à l'axe de rotation ;
- chacune desdites rainures est usinée directement sur la surface de palier ;
- l'élément de palier comprend plusieurs lamelles, les lamelles étant solidarisées à l'élément de palier, les rainures étant délimitées entre deux lamelles successives suivant une direction circonférentielle ;
- chaque lamelle a une section transversale à l'axe de rotation globalement en forme de trapèze isocèle ;
- chaque lamelle a une section transversale à l'axe de rotation qui est globalement en forme de segment de couronne ;
- les lamelles sont réalisées en un matériau sélectionné dans le groupe constitué d'un acier inoxydable, d'un polyéthylène à haute densité, du polyétheréthercétone, d'un polytétrafluoroéthylène et d'un composite à base de fibres et de résine de polyester imprégnée de polytétrafluoroéthylène et de MoS2 ;
- un deuxième rapport ayant comme numérateur, la largeur d'une rainure et comme dénominateur, la largeur d'une partie en saillie séparant deux rainures successives suivant une direction circonférentielle, est compris entre 0,4 et 0,8.
- l'arbre est revêtu de céramique.

La présente invention sera bien comprise et ses avantages ressortiront aussi à la lumière de la description qui va suivre, donnée uniquement à titre d'exemple non limitatif et faite en référence aux figures annexées, dans lesquelles :
- la figure 1A est une demi-coupe axiale d'une hydrolienne conforme à l'invention et comprenant un élément de palier conforme à un premier mode de réalisation de invention ;
- la figure 1B est une coupe complète de l'hydrolienne de la figure 1A ;
- la figure 2 est une vue à plus grande échelle du détail II à la figure 1A ;
- la figure 3 est une section transversale, suivant la ligne III ― III à la figure 2, de l'élément de palier à la figure 1A ;
- la figure 4 est une vue analogue à la figure 3 d'un élément de palier conforme à un deuxième mode de réalisation de l'invention ;
- la figure 5 est une vue à plus grande échelle du détail V à la figure 3 ; et
- la figure 6 est une vue à plus grande échelle du détail VI à la figure 4 ;

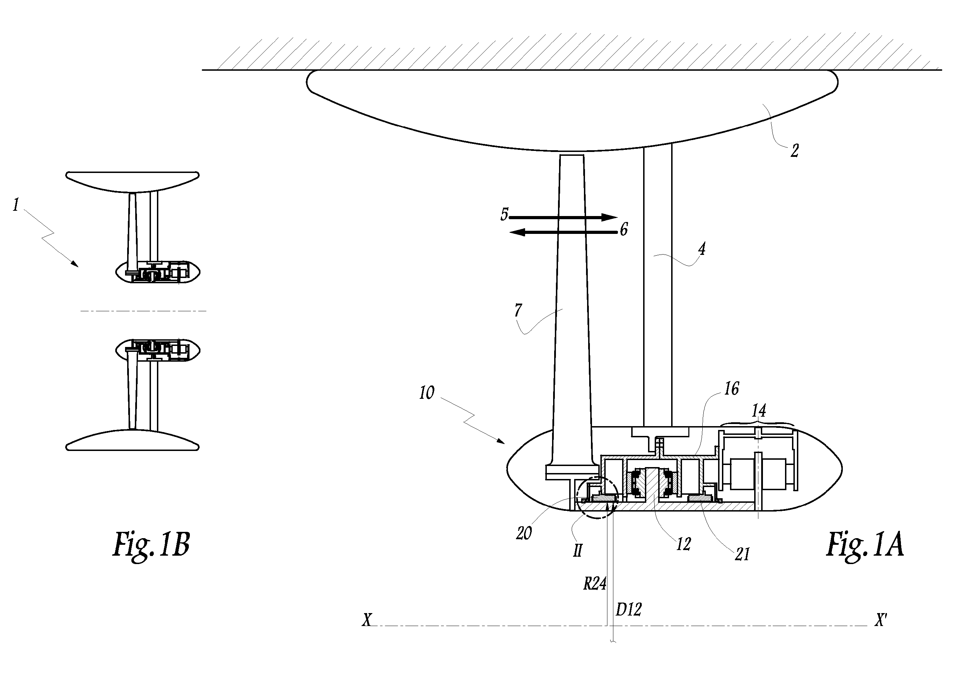

Les figures 1A et 1B montrent une hydrolienne 1 comprenant une ceinture 2, des avant-directrices 4, des aubes 7 et un bulbe 10 également dénommé par le mot anglais « *hub* ». La ceinture 2 est de forme globalement annulaire et elle est reliée au sol par une base gravitaire, structure composée d'une semelle et de plusieurs poteaux.

Le bulbe 10 est fixé à la ceinture 2 par l'intermédiaire des avant-directrices 4. Le bulbe 10 comporte un arbre 12, un générateur de puissance électrique 14 et un support 16. L'arbre 12 est mobile en rotation autour d'un axe de rotation X-X'.

Les aubes 7 sont fixées à l'une des extrémités de l'arbre 12. Les aubes 7 sont entrainées en rotation autour de l'axe X-X' par un flux d'eau s'écoulant dans la ceinture 2, soit dans un sens repéré par une flèche 5, soit dans l'autre sens repéré par une flèche 6.

Les avant-directrices 4 et les aubes 7 s'étendent globalement suivant des directions radiales et elles sont distribuées autour de l'axe X-X'. L'arbre 12, le bulbe 10, le générateur 14, le support 16 et la ceinture 2 présentent chacun une symétrie de révolution autour de l'axe X-X'.

Dans la présente demande, le terme « axial » qualifie soit une direction parallèle à l'axe de rotation X-X', soit une surface globalement perpendiculaire à l'axe de rotation X-X'. Dans la présente demande, le terme « radial » qualifie soit une direction perpendiculaire à l'axe de rotation X-X', soit une surface perpendiculaire à une telle direction radiale. Le terme « circonférentiel » qualifie une direction tangentielle C-C' et non sécante à l'axe de rotation X-X'.

Le bulbe 10 comporte aussi deux éléments de palier 20 et 21 pour supporter l'arbre 12, précisément pour en reprendre des efforts suivant les directions radiales. Dans la mesure où l'élément de palier 21 est identique ou semblable à l'élément de palier 20, la description de l'élément de palier 20 donnée ci-après peut être transposée à l'élément de palier 21.

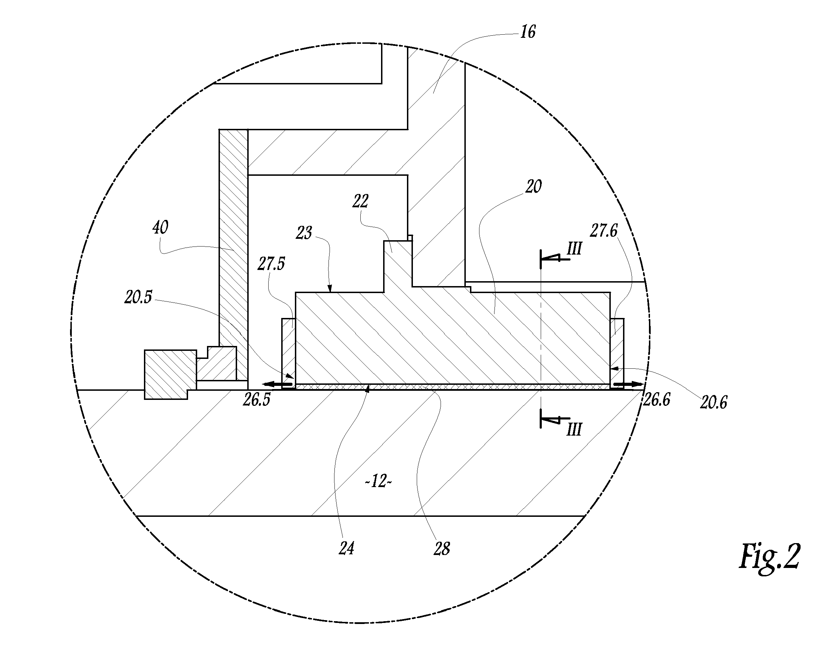

Comme le montre la figure 2, l'élément de palier 20 est solidarisé au support 16 au moyen d'une couronne 22 en saillie sur une surface cylindrique externe 23 de l'élément de palier 20 opposée à l'arbre 12. Des joints, dont un est visible à la figure 2 avec la référence 40, peuvent être montées entre l'arbre 12 et le support 16 pour limiter la circulation des particules de matières libérées lors des frottement entre pièces tournantes et/ou pour limiter des entrées intempestives de particules externes.

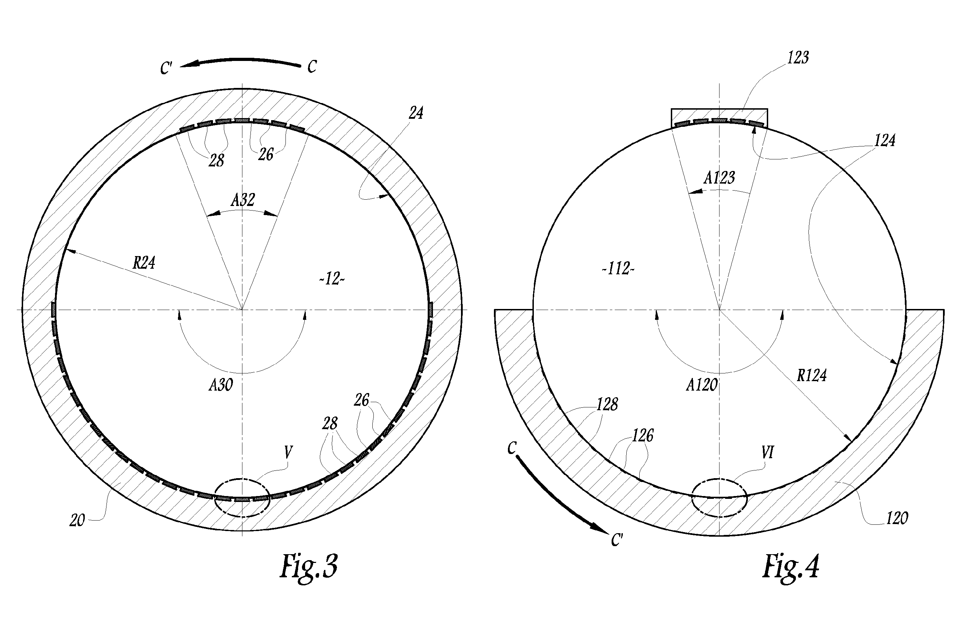

Comme le montrent les figures 2 et 3, l'élément de palier 20 comprend une surface de palier 24 dont la fonction est de supporter l'arbre 12 en rotation. La surface de palier 24 est de forme cylindrique et coaxiale à l'axe X-X'. La surface de palier 24 est adaptée pour délimiter avec l'arbre 12 un mince volume de réception de liquide sous forme de film. Le film de liquide contenu dans ce mince volume de réception peut ainsi former un palier hydrodynamique pour l'arbre 12 en rotation.

En d'autres termes, la surface de palier 24 et la surface cylindrique externe de l'arbre 12 sont sensiblement coïncidentes et séparées par un jeu fonctionnel. Comme le montre la figure 1A, le rayon R24 de la surface de palier 24 équivaut à la moitié du diamètre D12 de l'arbre 12. Le rayon R24 de la surface de palier 24 est compris entre 1 m et 3 m. Donc, le diamètre D12 est compris entre 2 m et 6 m.

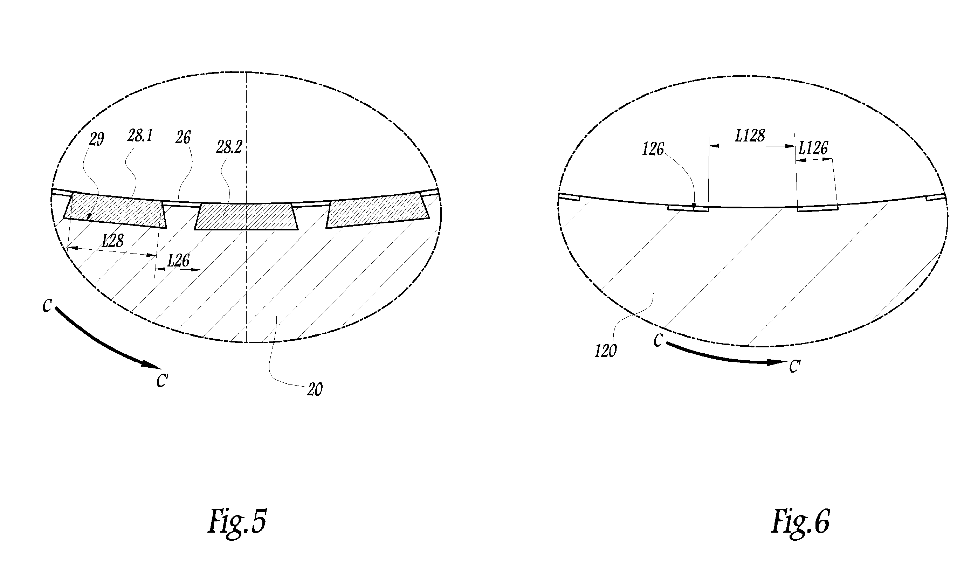

Comme le montrent les figures 3 et 5, la surface de palier 24 délimite plusieurs rainures 26. Les rainures 26 débouchent aux deux extrémités axiales 20.5 et 20.6 de l'élément de pilier 20, visible à la figure 2. Ainsi, le liquide formant le palier hydrodynamique peut circuler dans le volume de réception et en sortir par l'extrémité axiale 20.5 et/ou par l'extrémité axiale 20.6, comme le montre les flèches 26.5 et 26.6, en évacuant une partie de la chaleur produite lors de la rotation de l'arbre 12.

Dans l'exemple des figures, chaque rainure 26 est rectiligne et s'étend suivant une direction axiale. Une telle géométrie des rainures 26 simplifie la fabrication et/ou l'assemblage de l'élément de palier 20.

Comme le montre la figure 3, l'élément de palier 20 s'étend tout autour de l'axe de rotation X-X'. L'élément de palier 20 peut être constitué en acier et revêtu de céramique tel que le trioxyde de dichrome ou chromine Cr₂O₃.

Comme le montre la figure 5, l'élément de palier 20 comprend plusieurs lamelles 28 qui sont solidarisées à l'élément de palier 20, par exemple par coincement ou par obstacle mécanique tel qu'un pion ou une vis. Les lamelles 28 sont également connues sous le nom de « douelles ». Des cales 27.5 et 27.6 peuvent être prévues au niveau des extrémités axiales 20.5 et 20.6 et sur une partie de la circonférence de palier 20 dans le but de maintenir les lamelles 28.

Les rainures 26 sont délimitées entre deux lamelles 28.1 et 28.2 successives suivant une direction circonférentielle C-C'. Chaque lamelle 28 forme une partie en saillie, un plateau, entre deux rainures 26. De telles lamelles 28 permettent la formation du palier hydrodynamique au moyen du film liquide.

Les lamelles 28 sont réalisées en un matériau sélectionné dans le groupe constitué d'un acier inoxydable, d'un polyéthylène à haute densité (PEHD) tel que le Cestidur^{®}, d'un polyétheréthercétone (PEEK), d'un polytétrafluoroéthylène (PTFE) tel que le Graflon^{®} et d'un composite à base de fibres et de résine de polyester imprégnée de polytétrafluoroéthylène et de MoS2 tel que l'Orkot^{®}.

Pour dimensionner les rainures 26, un premier rapport ayant :
- comme numérateur, le rayon R24 de la surface de palier 24 et
- comme dénominateur, la largeur L26 d'une rainure 26
est compris entre 10 et 40.

De plus, un deuxième rapport ayant :
- comme numérateur, la largeur L26 d'une rainure 26 et
- comme dénominateur, la largeur L28 d'une lamelle 28 séparant deux rainures 26 successives suivant une direction circonférentielle C-C'
est compris entre 0,4 et 0,8.

En d'autres termes, le premier rapport correspond approximativement à des proportions comprises entre 1/30^{ème} et 1/15^{ème} de la largeur L28 d'une lamelle 28 sur le diamètre D12.

Les dimensions et les proportions (premier et deuxième rapports) des rainures 26 et des lamelles 28, telles que définies ci-avant permettent, d'une part, de réaliser un palier hydrodynamique au moyen du film de liquide et, d'autre part de faire circuler ce liquide dans le volume de réception par convection naturelle.

En d'autres termes, les rainures 26 sont adaptées pour faire circuler du liquide dans le volume de réception par convection naturelle, laquelle intervient suite à l'échauffement et aux compressions du liquide lors de la rotation de l'arbre 12.

Chaque lamelle 28 a une section transversale à l'axe X-X' qui est globalement en forme de trapèze isocèle. Comme le montre la figure 5, l'élément de palier 20 présente des rainures de fixation 29 qui ont une forme complémentaire à celle d'une lamelle 28. Les rainures de fixation 29 sont moins hautes que les lamelles 28, si bien que les lamelles 28 forment autant de parties en saillie. Le fond des rainures 26 est délimité par la surface de répartition 24, tandis que les flancs des rainures 26 sont délimités par les lamelles 28. Les rainures de fixation 29 permettent de solidariser les lamelles 28 et l'élément de palier 20 au moyen d'un assemblage en queue d'aronde.

Comme le montre la figure 3, les rainures 26 et les lamelles 28 s'étendent sur une partie seulement de la surface de palier 24. Précisément, la moitié basse de la surface de palier 24 est recouverte de rainures 26 et de lamelles 28, suivant un secteur angulaire A30 d'environ 180 degrés. La moitié haute de la surface de palier 24 ne comporte des rainures 26 et des lamelles 28 que dans sa partie sommitale suivant un secteur angulaire A32 d'environ 40 degrés.

Ainsi, les rainures 26 et les lamelles 28 de la moitié basse de la surface 22 et 24 remplissent la fonction de butée transmettant la majeure partie des efforts radiaux exercés par l'arbre 12 sur l'élément de palier 20. Les rainures 26 et les lamelles 28 de la moitié haute de la surface de palier 24 remplissent la fonction de contrebutée et supportent une moindre partie des efforts radiaux exercés par l'arbre 12 sur l'élément de palier 20.

Les figures 4 et 6 montrent des éléments de palier 120 et 123 conformes à un deuxième mode de réalisation de l'invention. Les éléments de palier 120 et 123 sont semblables à l'élément de palier 20. La description de l'élément de palier donnée ci-avant en relation avec les figures 3 et 5 peut être transposée aux éléments de palier 120 et 123 des figures 4 à 6, à l'exception des différences mentionnées ci-après.

Une entité de l'élément de palier 120 ou 123 qui est identique ou correspondante à une entité de l'élément de palier 20 porte la même référence numérique augmentée de 100. On définit ainsi un élément de palier 120, une surface de palier 124 avec un rayon R124 et un arbre 112.

L'élément de palier 120 s'étend, autour de l'axe X-X' ou selon la direction circonférentielle C-C', suivant un secteur angulaire A120 d'environ 180 degrés, donc inférieur à 360 degrés et de préférence inférieur à 200 degrés.

De même, l'élément de palier 123 s'étend, autour de l'axe X-X' ou selon la direction circonférentielle C-C', suivant un secteur angulaire A123 d'environ 40 degrés.

L'élément de palier 120 ou 123 diffère donc de l'élément de palier 20 par son extension limitée autour de l'axe X-X' selon la direction circonférentielle C-C'. Cette extension limitée de l'élément de palier 120 ou 123 réduit l'encombrement et la masse de l'hydrolienne qui en est équipée.

L'élément de palier 120 définit la butée basse tandis que l'élément de palier 123 définit une contrebutée haute. La surface de palier 124 est formée par la réunion des surfaces de palier respectives de l'élément détaillé 120 et de l'élément détaillé 123.

Par ailleurs, l'élément de palier 120 diffère de l'élément de palier 20 en ce que chaque rainure 126 est usinée directement sur la surface de palier 124. En d'autres termes, la surface de palier 124 délimite non seulement le fond mais aussi les flancs de chaque rainure 126.

Cette délimitation des rainures 126 rend relativement simple la fabrication et l'assemblage de l'élément de palier 120. En effet, cette solution permet de supprimer des pièces comme les douelles et leurs cales ou attaches.

En outre, l'élément de palier 120 diffère de l'élément de palier 20 en ce que chaque rainure 126 est usinée directement sur la surface de palier 124, sans lamelles rapportées sur la surface de palier 124. En d'autres termes, la surface de palier 124 délimite le fond et les flancs de chaque rainure les rainures 126. Ainsi, des plateaux 128 forment des parties en saillie entre deux rainures 126.

Les rainures 126 et plateaux 128 présentent des dimensions et proportions similaires à celles des rainures 126 et lamelles 128. Ainsi, le premier rapport ayant :
- comme numérateur, le rayon R124 de la surface de palier 124 et
- comme dénominateur, la largeur L126 d'une rainure 126
est compris entre 10 et 40.

De plus, le rapport ayant :
- comme numérateur, la largeur L126 d'une rainure 126 et
- comme dénominateur, la largeur L128 d'un plateau 128 séparant deux rainures 126 successives suivant la direction circonférentielle C-C'
est compris entre 0,4 et 0,8.

Selon d'autres modes de réalisation non représentés de l'invention :
- chacune des rainures s'étend suivant une hélice circulaire coaxiale à l'axe de rotation ;
- chaque lamelle a une section transversale à l'axe de rotation globalement en forme de segment de couronne, c'est-à-dire une section transversale curviligne.
- la totalité de la surface de palier est recouverte de rainures et de plateaux ou de lamelles,
- l'hydrolienne comprend plus de deux éléments de palier répartis autour de l'arbre, par exemple trois éléments de paliers ;

Un élément de palier conforme à l'invention permet de faire circuler de liquide par convection naturelle au niveau du palier, supprimant ainsi la nécessité d'incorporer un dispositif de pompage à l'hydrolienne. Une hydrolienne conforme à l'invention présente donc un encombrement réduit et une fiabilité accrue.

## Revendications

1. Hydrolienne (1) comprenant une turbine équipée d'un arbre (12) mobile en rotation autour d'un axe de rotation (X-X'), **caractérisée**
**en ce qu'**elle comprend un élément de palier (20, 21 ; 120, 123) pour supporter l'arbre (12), les extrémités axiales (20.5 ; 20.6) de l'élément de palier (20, 21 ; 120, 123) étant en communication de fluide avec la masse d'eau dans laquelle est installée l'hydrolienne (1),
**en ce que** l'élément de palier (20, 21 ; 120, 123) comprend une surface de palier (24 ; 124) de forme cylindrique et coaxiale à l'axe de rotation (X-X'), le rayon (R24 ; R124) de la surface de palier (24 ; 124) étant compris entre 1 m et 3 m et la surface de palier (24 ; 124) étant adaptée pour délimiter avec l'arbre (12) un volume de réception de liquide sous forme de film,
**en ce que** la surface de palier (24 ; 124) délimite plusieurs rainures (26 ; 126) débouchant à chaque extrémité axiale (20.5 ; 20.6) de l'élément de palier (20, 21 ; 120, 123), lesdites rainures (26 ; 126) ayant des dimensions et proportions adaptées pour faire circuler du liquide dans le volume de réception par convection naturelle suite à l'échauffement et aux compressions du liquide lors de la rotation de l'arbre (12) et
**en ce que** un premier rapport ayant :
- comme numérateur, le rayon (R24 ; R124) de la surface de palier (24 ; 124)
et
- comme dénominateur, la largeur (L26 ; L126) d'une rainure (26 ; 126) est compris entre 10 et 40.

2. Hydrolienne (1) selon la revendication 1, **caractérisée en ce que** l'élément de palier (20, 21) s'étend tout autour de l'axe de rotation (X-X').

3. Hydrolienne (1) selon la revendication 1, **caractérisée en ce que** l'élément de palier (120, 123) s'étend, autour de l'axe de rotation (X-X'), suivant un secteur angulaire (A120, A123) inférieur à 360 degrés, de préférence inférieur à 200 degrés.

4. Hydrolienne (1) selon l'une des revendications précédentes, **caractérisée en ce que** chacune desdites rainures (26 ; 126) s'étend suivant une direction parallèle à l'axe de rotation (X-X').

5. Hydrolienne (1) selon l'une des revendications 1 à 3, **caractérisée en ce que** chacune desdites rainures s'étend suivant une hélice circulaire coaxiale à l'axe de rotation.

6. Hydrolienne (1) selon l'une des revendications précédentes, **caractérisée en ce que** chacune desdites rainures (126) est usinée directement sur la surface de palier (124).

7. Hydrolienne (1) selon l'une des revendications 1 à 5, **caractérisée en ce que** l'élément de palier (20, 21 ; 123) comprend plusieurs lamelles (28), les lamelles (28) étant solidarisées à l'élément de palier (20, 21 ; 123), les rainures (26) étant délimitées entre deux lamelles (28) successives suivant une direction circonférentielle (C-C').

8. Hydrolienne (1) selon la revendication 7, **caractérisée en ce que** chaque lamelle (28) a une section transversale à l'axe de rotation (X-X') globalement en forme de trapèze isocèle.

9. Hydrolienne (1) selon la revendication 7, **caractérisée en ce que** chaque lamelle a une section transversale à l'axe de rotation qui est globalement en forme de segment de couronne.

10. Hydrolienne (1) selon l'une des revendications 7 à 9, **caractérisée en ce que** les lamelles (28) sont réalisées en un matériau sélectionné dans le groupe constitué d'un acier inoxydable, d'un polyéthylène à haute densité, du polyétheréthercétone, d'un polytétrafluoroéthylène et d'un composite à base de fibres et de résine de polyester imprégnée de polytétrafluoroéthylène et de MoS2.

11. Hydrolienne (1) selon l'une des revendications précédentes, **caractérisée en ce qu'**un deuxième rapport ayant :
- comme numérateur, la largeur (L26 ; L126) d'une rainure (26 ; 126) et
- comme dénominateur, la largeur (L28 ; L128) d'une partie en saillie (28 ; 128) séparant deux rainures (26 ; 126) successives suivant une direction circonférentielle (C-C')
est compris entre 0,4 et 0,8.

12. Hydrolienne (1) selon l'une des revendications précédentes, **caractérisée en ce que** l'arbre (12) est revêtu de céramique.
